# EUROPEAN PATENT APPLICATION

(11) **EP 1 619 344 A2**
(43) Date of publication of application: **25.01.2006**
(21) Application number: 04026996.1
(22) Date of filing: 12.11.2004
(51) Int. Cl.: E06B 3/66, B32B 17/10

(54) **Improved glass-chamber construction**

(30) Priority: 23.07.2004 IT MI20041503
(71) Applicant: Altair S.A.S. di Orbecchi Pia, 27100 Pavia (Milano) (IT)
(72) Inventor: Orbecchi, Pia, 20082 Noviglio (IT); Soriani, Andrea, 27020 Battuda Pavia (IT)
(74) Representative: Cicogna, Franco

(57) **Abstract**

An improved glass-chamber construction (1) comprises a first glass sheet (2) coupled to a second glass sheet (3) along its perimeter, with an interposition of a spacer elements (4), thereby providing an inner chamber (5), a safety film (6,7) being applied to the inner face of each of the two glass sheets (2,3).

## Description

### BACKGROUND OF THE INVENTION

The present invention relates to an improved glass-chamber construction.

As is known, available safety layered glass assemblies conventionally comprise two or more glass sheets or plates which are coupled to one another through the overall surface thereof, by the interposition of plastic films, in particular polyvinylbutyrral films (PVB having a minimum thickness of 0.76 mm) as defined by the UNI EN ISO 12543 standards.

Asymmetrical layered safety glasses (UNI 12543-1 item 3.5) are moreover known, comprising pairs of monolithic glass sheets having a variable thickness, starting from a minimum of 2 mm, and which are provided with safety properties by applying suitable safety films, having a minimum thickness of 50 microns, as tested and certified by pr EN 12600 standards for the safety classes B1 - B2 - B3.

Insulating glazings as layered to provide them with safety properties, on their two sides or faces, as commercially used, are made by assembling two layered glass sheets, having a minimum thickness 3 + 3 each and firmly connected along their perimeters, to provide a glass chamber which can have a variable thickness.

### SUMMARY OF THE INVENTION

The aim of the present invention is to provide such a glass-chamber construction which is greatly improved with respect to prior glass-chamber constructions.

Within the scope of the above mentioned aim, a main object of the present invention is to provide such a glass-chamber or insulating glazing construction, including safety glasses according to the classes B1, B2 and B3, the safety properties of which are obtained by applying safety films on each inner side of said chamber, either with or without antisun functions, with a very reduced operating weight and thickness.

Yet another object of the present invention is to provide such a glass-chamber construction which can be easily made starting from easily available materials.

Yet another object of the present invention is to provide such a glass-chamber construction, which, owing to its very small weight, allows to use supporting window and door frames having thicknesses and weights much smaller than those which are at present necessary, thereby allowing to recover existing window and door frames, of low load supporting capabilities, without the need of replacing them.

According to one aspect of the present invention, the above mentioned aim and objects, as well as yet other objects, which will become more apparent hereinafter, are achieved by an improved glass-chamber construction, characterized in that it comprises a first glass sheet coupled to a second glass sheet along the perimeter thereof with an interposition of a spacer element, thereby providing an inner chamber, and in that a safety film is applied to an inner face of each said two glass sheets.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example, in the accompanying drawings, where:

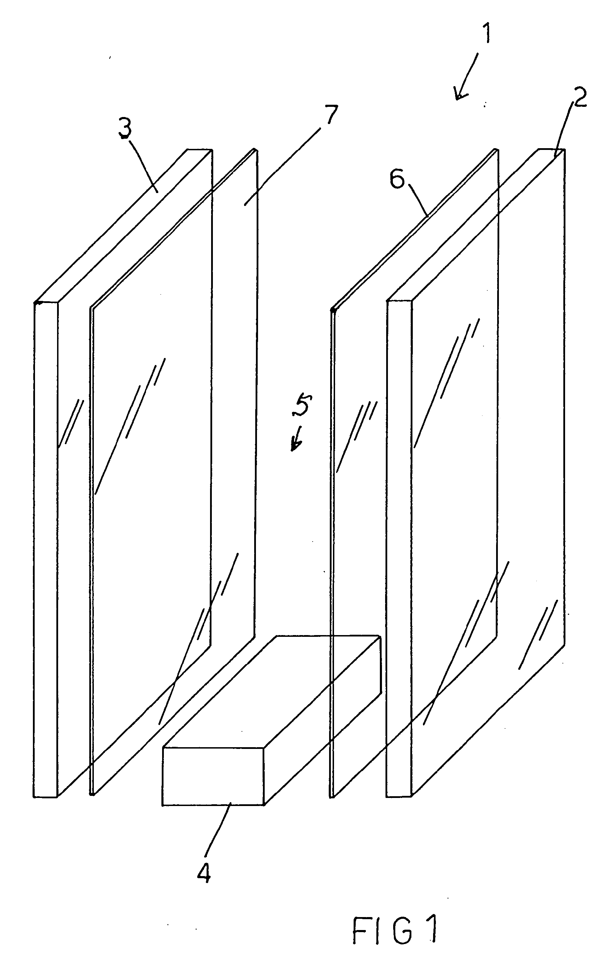

Figure 1 is an exploded perspective view of a portion of a glass-chamber construction according to the present invention; and

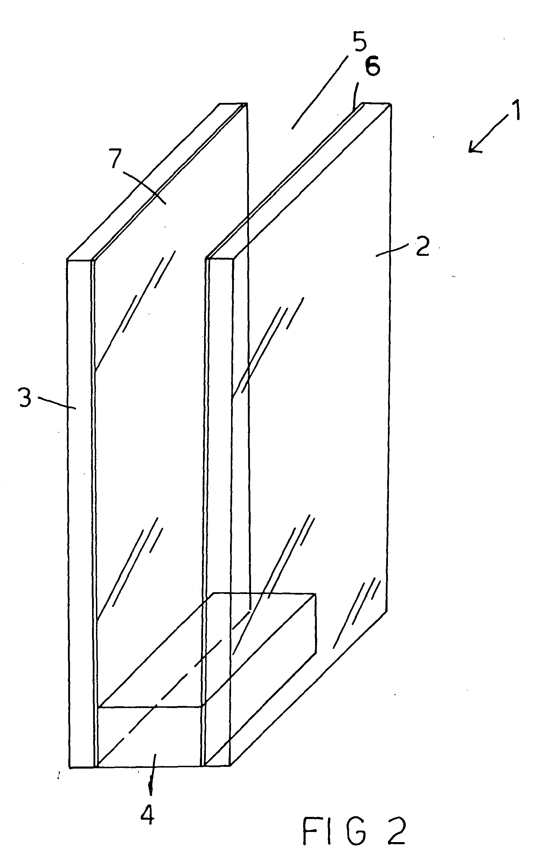

Figure 2 is a further perspective view, in an assembled condition, of the glass-chamber construction according to the invention.

### DESCRIPTION OF THE PREFERRED EMBODIMENT

With reference to the number references of the above mentioned figures, the glass-chamber construction according to the invention, which has been generally indicated by the reference number 1, comprises a first glass sheet or plate 2, which is firmly coupled to a second glass-sheet or plate 3 along their perimeters, with an interposition of a spacer element 4, to provide an inner chamber 5 having a variable thickness, in a per se known manner.

Each said glass sheet comprises a safety asymmetrical layered glass element, made by using a monolithic glass sheet or plate, to which a safety film 6, 7 has been inside applied, up to the glass edge portion.

The maximum tolerance for such an application is preferably at 5 mm therefrom.

The following Table 1 shows exemplary weights and thicknesses, for the most common applications of a safety glass chamber.

**Table 1**

| Name Sgg stadip | Composition | Total thickness mm | Total weight of the glass chamber Kg/m² | Safety class |
|---|---|---|---|---|
| 33.1 | 33.1(12)33.1 | 24.5 | 31 | B2 |
| 44.1 | 44.1(12)44.1 | 28.5 | 41 | B2 |
| 55.1 | 55.1(12)55.1 | 32.5 | 51 | B1 |

The following Table 2 shows exemplary weights and thicknesses which can be obtained by the glass-chamber construction according to the present invention, made of a monolithic glass sheet or plate and with an inner chamber of 12 mm.

**Table 2**

| Thickness mm. | Composition | Total thickness mm | Total weight of the glass chamber Kg/m² | Safety class |
|---|---|---|---|---|
| 3 | 3(12)3 | 18.5 | 15 | B2 |
| 4 | 4(12)4 | 20.5 | 20 | B1 |
| 6 | 6(12)6 | 24.5 | 30 | B1 |

The following Table 3 shows comparative examples and improvement rates of the thicknesses of the glass-chamber construction according to the present invention, with respect to conventional constructions.

**Table 3**

| Safety class | composition | prior art | invention | improvement % |
|---|---|---|---|---|
| B2 | 33.1(12)33.1 | 24.5 | 18.5 | 24.5% |
| B2 | 44.1(12)44.1 | 28.5 | 20.5 | 28.1% |
| B1 | 55.1(12)55.1 | 32.5 | 24.5 | 24.6% |

The following Table 4 shows comparating examples and improvement rates related to the glass chamber construction according to the present invention with respect to conventional or prior constructions.

**Table 4**

| Safety class | composition | prior art | invention | improvement % |
|---|---|---|---|---|
| B2 | 33.1(12)33.1 | 31 | 15 | 51.6% |
| B2 | 44.1(12)44.1 | 41 | 20 | 51.2% |
| B1 | 55.1(12)55.1 | 51 | 30 | 41.2% |

In this connection it should be apparent that the glass-chamber construction according to the present invention can comprise antisun functions, for maintaining or holding the inlet sun heat, by making the plate or sheet of the outer layered construction by a known type of sun controlling glass material, for example the conventionally known "Cool-lite" material made by the Saint-Gobain Company.

The following Table 5 shows comparating examples and improved rates related to the weight of the sun controlling glass chamber construction according to the present invention, with respect to prior like construction.

**Table 5**

| Safety class | composition | prior art | invention | Improvement % |
|---|---|---|---|---|
| B2 | 6+3(12)33.1 | 38.5 | 15 | 61% |
| B2 | 6+3(12)44.1 | 43 | 20 | 53.5% |
| B1 | 6+3(12)55.1 | 45 | 30 | 33.3% |

A preferred embodiment of the glass-chamber construction according to the present invention, comprises an outer glass sheet 2 made of a monolithic glass material, having a minimum thickness of 2 mm, to the inner face of which has been applied a safety film 6 for transforming the monolithic glass sheet 2 into a safety asymmetric layered glass construction, as certified, either with or without antisun functions, for the safety classes B1, B2, B3.

With the wordings "outer glass sheet or plate", it is meant the glass sheet arranged on the outside of the building.

The inner glass chamber 5 can have any desired sizes.

With the wordings "inner glass sheet or plate 3", it is intended the glass plate or sheet arranged in the inside of the building, which comprises a monolithic glass element having a minimum thickness of 2 mm.

To the inner face of the inner glass sheet 3 a safety film 7 has been applied, to transform the monolithic glass sheet into a safety asymmetrical layered glass element, certified for the safety classes B1, B2, B3.

The safety films to be used have been certified depending on the safety standards for the intended safety classes.

The mentioned films are preferably clear, without any optical aberrations, anti U.V. at a 99% rate, and being provided with an adhesive material on a face thereof.

Inside the construction is arranged, in a well visible manner, an identifying mark or sign, as well as a certifying sign for the related safety class.

It has been found that the invention fully achieves the intended aim and objects.

In fact, the invention provides an improved glass-chamber construction, with a weight reduction depending on the thickness of the used base glass sheet material, with an average weight reduction from 33% to 61%, thereby allowing to use load bearing door and window frames having less thicknesses and weights, with respect to those which are at present necessary, thereby also allowing to recover existing window and door frames of low load supporting capabilities, without the need of replacing them.

In practicing the invention, the used materials, as well as the contingent size and shapes, can be any, according to requirements.

## Claims

1. An improved glass-chamber construction, **characterized in that** it comprises a first glass sheet, coupled to a second glass sheet, along the perimeters thereof, with an interposition of the spacer element, thereby providing an inner chamber, a safety film being applied to the inner face of each said two glass sheets.

2. A glass-chamber construction, according to claim 1, **characterized in that** said safety film transforms each said monolithic glass sheet into a safety asymmetrical layered glass sheet.

3. A glass-chamber construction, according to claim 1 or 2, **characterized in that** each said glass-sheet comprises a safety asymmetrical layered glass sheet made of a monolithic glass sheet or plate, to which is applied a safety film up to the edges of said glass sheet.

4. A glass-chamber construction, according to one or more of the preceding claims, **characterized in that** the glass sheet of the outer layered glass element comprises a sun ray controlling glass material.

5. A glass-chamber construction, according to one or more of the preceding claims, **characterized in that** the glass sheet of the outer layered glass element comprises a glass material having an inner surface to which an anti-sun safety film is applied.

6. A glass-chamber construction, according to one or more of the preceding claims, **characterized in that** it comprises one or more of the disclosed and/or illustrated features.
